# EUROPEAN PATENT SPECIFICATION

(11) **EP 4 223 478 B1**
(45) Date of publication and mention of the grant of the patent: **27.05.2026**
(21) Application number: 22155511.3
(22) Date of filing: 07.02.2022
(51) Int. Cl.: B29C 33/38, B29C 33/56, B29C 39/26

(54) **A MOLD FOR EPOXY CASTINGS AND A METHOD FOR PRODUCING MOLDS FOR EPOXY CASTINGS**
FORM FÜR EPOXIDGUSSTEILE UND VERFAHREN ZUR HERSTELLUNG VON FORMEN FÜR EPOXIDGUSSTEILE
MOULE POUR MOULAGES D'ÉPOXY ET PROCÉDÉ DE PRODUCTION DE MOULES POUR MOULAGES D'ÉPOXY

(43) Date of publication of application: 09.08.2023
(73) Proprietor: ABB Schweiz AG, 5400 Baden (CH)
(72) Inventor: Siwek, Artur, 31-421 Kraków (PL); Rybak, Andrzej, 30-349 Kraków (PL); Rzepecki, Micha, 30-650 Kraków (PL)
(74) Representative: AOMB Polska Sp. z.o.o.

(56) References cited:
- WO-A1-2016/019937
- WO-A1-2017/158503

## Description

### Technical field

The present invention relates to a mold for epoxy castings and a method for producing molds for epoxy castings.

### Background of the invention

From American patent application US20210162633A1 there is known a casting mold with a treated outer surface produced by a powder-based layering method. The powder can be in particular sands, ceramic powders, metal powders, plastics, wood particles, fibrous materials, celluloses and/or lactose powders. Further, the treated surface can comprise a coating, for example the sand can be precoated with an activator component. Furthermore, the outer surface of the produced mold can be additionally sealed with a hydrophobic material to limit the penetration of the casting material into the pores of the casting mold.

From Chinese patent CN110227797B there is known a method of manufacturing 3D printed molds for casting titanium alloys. The method comprises vacuum infiltration of a printed sand mold to form a bonding layer of the printed sand mold, drying of the sand mold, coating the surface of the bonding layer with a coating of inert material to form a transition layer and coating said transition layer to form a surface layer. The formation of the transition layer is done using yttrium sol and zirconia powder with a weight ratio of 0.5-2:1.5-3.5. The layer takes 2 to 8 hours to cure. The formation of the surface layer is done using yttrium sol and zirconia powder with a weight ratio of 0.5-2:2-6. The layer takes 2.5 to 9 hours to cure.

From PCT application WO2021015074A1 there is known a sand mold manufactured using 3D printing technology and a method of manufacturing the sand mold. Said mold is a laminated mold obtained using powder-fixed lamination. Said method of manufacturing a mold provides reduction of the amount of casting sand used.

Chinese patent application CN112008042A discloses a sand mold, especially a reinforced sand mold, and a method of manufacturing said mold. Said mold is printed using 3D technology and said mold comprises a reinforcement layer achieved in a curing process. The reinforcement layer can be made for example from materials like epoxy resin, polyimide, polyester, polyether or polyamide.

Chinese patent application CN111421109A discloses a method for or preparing a sand mold based on 3D printing. The method constitutes a combination of 3D printing technology and a casting process and aims at improving production efficiency and enabling large-scale mold production. In the disclosed method a mold is coated with refractory paint.

American patent US8137607B2 discloses a method of manufacturing a mold using 3D printing technology and a mold obtained by said method. The mold is manufactured based on a mixture of sand and an activating agent. The mold so obtained is infiltrated with a low viscosity resin such as epoxy, urethane, or acrylic.

Further, French patent FR2724336B1 discloses a method for producing foundry molds of silica sand. Such molds can be used, for example, for casting metal alloy products. The sand in said method is subjected to cold chemical curing, and the surface of the mold is covered with a plastic one-layer film. This film has a thickness of 30 to 100 microns. The aim of using such film is sealing of the sand mold.

PCT application WO2016019937A1 discloses a casting mold, in particular for use in cold casting processes, which is produced by means of a powder-based layer build-up process, the final casting mold having a treated surface. The treated surface can, for example, prevent the penetration of casting material into the molded body due to hydrostatic pressure or capillary effects.

Furthermore, PCT application WO2017158503A1 discloses a method for mould production, comprising: preparing first core made of polystyrene; shaping said core, thereby obtaining a shaped core; executing a first thermoforming operation to coat said shaped core with a first thermoformable thermoplastic material, thereby obtaining a first coated structure; executing an additional thermoforming operation to coat said coated structure with an additional thermoformable thermoplastic material, thereby obtaining a shaped structure formed by said additional thermoformable thermoplastic material; executing a step of separating said coated structure from said shaped structure; wherein said shaped structure forms a mould. The object of the invention according to said application is to provide a method for mould production that ensures fast execution without however impairing the mechanical characteristics of the mould thus obtained. The further object of said invention is to provide a method for mould production that allows manufacturing moulds having very different shapes without implying any particular complications in the production method.

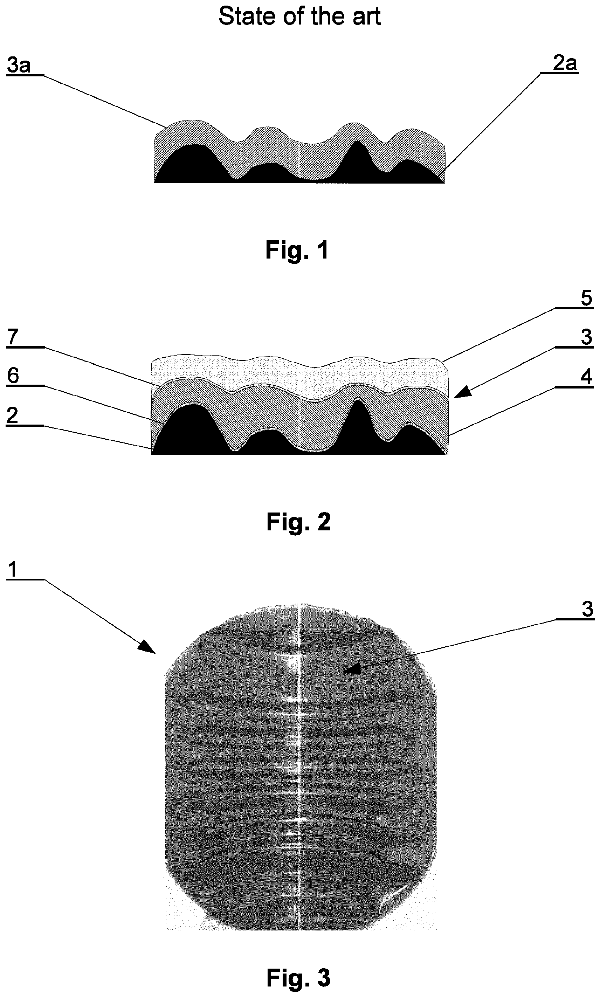

It is also known from the prior art that molds for epoxy castings, especially 3D printed sand molds, are characterized by high porosity and high surface roughness compared to standard metal made molds which in turn leads to the occurrence of an unfavorable adhesion phenomenon between a mold and casted resin. To prevent said adhesion phenomenon, it is common practice to provide molds with an anti-stick coating on a mold body (2a), either a one-layer coating (3a) as shown in Fig. 1 or multilayer coating by means of release agents (e.g. silicon oil), spring, immersion or powder painting. Unfortunately, all these methods are either complicated and they do not provide sufficient adhesion between a mold body and a coating. The complexity of the mold production process makes that such process is expensive and time consuming as well. Therefore, an object of the invention is to provide a mold for epoxy castings with improved adhesion between a mold body and a coating and a method for producing a mold for epoxy castings in a simpler way compared to state-of-the-art solutions.

### The Essence of the Invention

The object of the invention is a mold for epoxy castings comprising a mold body and a coating covering the mold body. The coating is made of multilayered thermoformable foil comprising at least an inner layer and at least an outer layer for being exposed to the epoxy resin during casting. The inner layer is located between the mold body and the outer layer, wherein the inner layer fills the rough and porous surface of the mold body. The layers of the multilayered thermoformable foil being made of different kinds of polymers. The essence of the invention is that the coating comprises a first thermoformable adhesive layer located between the mold body and the inner layer.

The application of the first thermoformable adhesive layer located between the mold body and the inner layer provides improved adhesion between them.

Further, said layers of the coating have different hardness, as one fills mold body surface and the second is exposed to the epoxy resin during casting, which leads to reduction of surface roughness of said mold. In this way, the disclosed coating structure provides an improvement in the surface quality of the mold.

Preferably, a hardness of the inner layer is from 10 Shore A to 85 Shore D and a hardness of the outer layer is from 65 Shore A to 120 Rockwell R, wherein the hardness of the inner layer is not greater than the hardness of the outer layer.

The application of the inner layer with the hardness 10 Shore A to 85 Shore D leads to improvement filling of the rough and porous surface of the mold body.

Preferably, the coating comprises a second thermoformable adhesive layer located between the inner layer and the outer layer.

The application of the second thermoformable adhesive layer located between the inner layer and the outer layer provides improved adhesion between them and as a consequence it leads to enhancement of structural integrity of the coating.

Preferably, the inner layer is made of material selected from polyethylene, low-density polyethylene, polypropylene, polystyrene, high impact polystyrene, styrenic block copolymers, thermoplastic polyolefin elastomers, thermoplastic elastomer vulcanizates, thermoplastic polyurethane elastomers, thermoplastic copolyester elastomers or thermoplastic polyamide elastomers.

The application of the inner layer made of one the materials mentioned above ensures the elimination of a large amplitude of roughness created by valleys and hills of the mold body. Thus it leads to effective interlocking and levelling of that layer. Such problem is particularly notable with mold bodies produced by 3D sand printing.

Preferably, the outer layer is made of polyethylene terephthalate or polyamide.

The application of the outer layer made of one the materials mentioned above makes it possible to create, after thermoforming, a hard surface with thermal and chemical resistance.

Preferably, the outer layer is made of fluoropolymer.

Preferably, fluoropolymer is selected from a group of polyvinyl fluoride, polyvinylidene fluoride, polytetrafluoroethylene, polychlorotrifluoroethylene, perfluoroalkoxy polymer, fluorinated ethylene-propylene, polyethylenetetrafluoroethylene or polyethylenechlorotrifluoroethylene.

The application of fluoropolymer, especially one of the above-mentioned, improves anti-sticking properties of the outer layer compared state of the art solutions and as a result makes thermoforming more efficient. Thus, it leads to further improvement in the surface quality of the mold.

Preferably, the thermoformable adhesive layer is made of material selected from polyurethane, acrylic acid grafted polyethylene, acrylic acid grafted poly(ethylene-vinyl acetate) or maleic anhydride grafted polypropylene.

Preferably, a thickness of the inner layer is of 0.1 to 2 mm, wherein a thickness of the coating covering the mold body is of 0.15 to 3.0 mm.

Preferably, a thickness of the outer layer is of 0.05 to 1 mm.

The object of the invention is also a method for producing the mold comprising the steps of preparing a mold body, preparing a coating for covering the mold body, and applying the coating on the mold body by thermoforming to form the mold.

The method according to the invention constitutes simplification of a mold production method known from the prior art as a coating is applied to the mold body only in one method step, i.e. during thermoforming.

Preferably, the mold body is prepared in a 3D printing process, in particular, sand printing or stereolithography process.

The application of 3D printing in a mold body preparation leads to simplification and acceleration of the method according to the invention.

The preparation of the mold body in the stereolithography process requires evacuation holes to be made to enable complete air evacuation during thermoforming.

Preferably, the thermoforming is vacuum thermoforming.

The application of vacuum thermoforming is especially suitable for applying of the coating on the 3D sand printed body mold as it is porous, and the air can be easily evacuated through such mold body.

Preferably, the thermoforming is pressure thermoforming.

The application of pressure thermoforming provides higher pressure difference between the coating and the mold body, which in turn ensures better adhesion of said coating to said mold body and higher reduction of surface roughness compared to usage of vacuum thermoforming.

### Advantages of the invention

The mold and the method according to the invention ensure reduction of surface roughness and porosity compared to the state of the art solutions.

The mold coating of the mold according to the invention is characterized by improved anti-stick properties compared to the state of the art solutions.

The method according to the invention constitutes simplification of a mold production method known from the prior art as a coating is applied to the mold body only in one method step, thus during thermoforming.

The mold and the method according to the invention allow for fast verification of a new device design, so they are particularly useful when prototyping new devices.

### Description of the drawings

The subject of the invention is shown in the embodiments in a drawing, in which:
- Fig.1: presents schematically a fragment of a mold body coated with a one-layer coating according to the prior art;
- Fig.2: presents schematically a fragment of a mold body with a coating according to the second embodiment of the invention;
- Fig.3: presents a mold according to the invention;
- Fig.4: presents a flowchart of a method for producing a mold for epoxy castings according to the invention.

### Detailed description of the invention

### The first embodiment of the invention

### A mold for epoxy castings

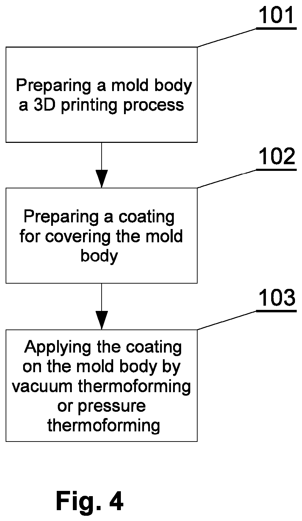

A mold 1 for epoxy castings comprising a mold body 2 and a coating 3 covering the mold body 2. A thickness of the coating 3 covering the mold body 2 is of 0.15 to 3.0 mm. The coating 3 is made of a multilayered thermoformable foil comprising an inner layer 4 and an outer layer 5 for being exposed to the epoxy resin during casting. A thickness of the inner layer 4 is of 0.1 to 2 mm and a thickness of the outer layer 5 is of 0.05 to 1 mm. The inner layer 4 is located between the mold body 2 and the outer layer 5, wherein the inner layer 4 fills the rough and porous surface of the mold body 2. Furthermore, the layers of the multilayered thermoformable foil being made of different kinds of polymers. The layers 4, 5 of the coating 3 have different hardness, as one fills mold body surface and the second is exposed to the epoxy resin during casting, which leads to reduction of surface roughness of the mold 1. In this way, the disclosed coating 3 structure provides an improvement in the surface quality of the mold 1. The surface of improved quality is well visible as glossy surface (Fig. 4). Further, a hardness of the inner layer 4 is from 10 Shore A to 85 Shore D and a hardness of the outer layer 5 is from 65 Shore A to 120 Rockwell R, wherein the hardness of the inner layer 4 is not greater than the hardness of the outer layer 5. The application of such defined inner layer leads to improvement in filling of the rough and porous surface of the mold body 2.

Furthermore, the inner layer 4 is made of material selected from polyethylene, low-density polyethylene, polypropylene, polystyrene, high impact polystyrene, styrenic block copolymers, thermoplastic polyolefin elastomers, thermoplastic elastomer vulcanizates, thermoplastic polyurethane elastomers, thermoplastic copolyester elastomers or thermoplastic polyamide elastomers. The application of the inner layer 4 made of one the materials mentioned above ensures the elimination of a large amplitude of roughness created by valleys and hills of the mold body 2. Thus, it leads to effective interlocking and levelling of that layer. Such problem is particularly notable with mold bodies produced by 3D sand printing.

The outer layer 5 is made of material selected from polyethylene terephthalate or polyamide. The application of the outer layer 5 made of one the materials mentioned above makes it possible to create, after thermoforming, a hard surface with thermal and chemical resistance.

The coating 3 comprises further a first thermoformable adhesive layer 6 located between the mold body 2 and the inner layer 4. The application of the first thermoformable adhesive layer 6 located between the mold body 2 and the inner layer 4 provides improved adhesion between them.

The thermoformable adhesive layer 6 is made of material selected from polyurethane, acrylic acid grafted polyethylene, acrylic acid grafted poly(ethylene-vinyl acetate), maleic anhydride grafted poly(ethylene-vinyl acetate) or maleic anhydride grafted polypropylene. Further, the thermoformable adhesive layer 6 can be made of other glues or adhesive promotors.

### A method for producing a mold for epoxy castings

In a method for producing a mold 1 for epoxy castings in the first step a mold body 2 is prepared 101 in a process of 3D printing. The most preferred is sand printing, where the mold body 2 can be made of silica sand, ceramics, metal particles or a mixture of these. The application of 3D printing, especially sand printing, in the mold body 2 preparation leads to simplification and acceleration of said method.

In the other embodiments, the mold body 2 can be prepared alternatively in a stereolithography process. However, the preparation of the mold body 2 in that process requires evacuation holes to be made to enable complete air evacuation during thermoforming. Other alternatives of 3D printing are which can be used are selective laser sintering, fused deposition modeling and multi jet fusion.

Next, a coating 3 for covering the mold body 2 is prepared 102. The coating 3 is the same as presented in the above part disclosing details about the mold for epoxy castings. In the last step the coating 3 is applied 103 on the mold body 2 by vacuum thermoforming to form the mold 1. The application of vacuum thermoforming is especially suitable for applying of the coating 3 on the 3D sand printed body mold 2 as it is porous and the air can be easily evacuated through such mold body.

In the other embodiments, the coating 3 can be applied 103 on the mold body 2 by pressure thermoforming. The application of pressure thermoforming provides higher pressure difference between the coating 3 and the mold body 2, which in turn ensures better adhesion of the coating 3 to the mold body 2 and higher reduction of surface roughness compared to usage of vacuum thermoforming.

The application of pressure thermoforming provides higher pressure difference between the coating and the mold body, which in turn ensures better adhesion of said coating to said mold body and higher reduction of surface roughness compared to usage of vacuum thermoforming.

The method according to the invention constitutes simplification of a mold production method known from the prior art as the coating 3 is applied to the mold body 2 only in one method step, i.e. during thermoforming.

### The second embodiment of the invention

### A mold for epoxy castings

The second embodiment of the mold 1 for epoxy castings is as in the first embodiment, with the difference that the outer layer 5 is made of fluoropolymer, wherein the fluoropolymer can be selected from group of polyvinyl fluoride, polyvinylidene fluoride, polytetrafluoroethylene, polychlorotrifluoroethylene, perfluoroalkoxy polymer, fluorinated ethylene-propylene, polyethylenetetrafluoroethylene or polyethylenechlorotrifluoroethylene. The application of fluoropolymer, especially one of the above-mentioned, improves anti-sticking properties of the outer layer 5 compared state of the art solutions and as a result makes thermoforming more efficient. Thus, it leads to further improvement in the surface quality of the mold 1.

### The third embodiment of the invention

### A mold for epoxy castings

The third embodiment of the mold 1 for epoxy castings is as in the first or the second embodiment, with the difference that the coating 3 comprises further a second thermoformable adhesive layer 7 located between the inner layer 4 and the outer layer 5. The thermoformable adhesive layer 7 is made of material selected from polyurethane, acrylic acid grafted polyethylene, acrylic acid grafted poly(ethylene-vinyl acetate), maleic anhydride grafted poly(ethylene-vinyl acetate) or maleic anhydride grafted polypropylene. Further, the thermoformable adhesive layers 7 can be made of other glues or adhesive promotors. The application of the second thermoformable adhesive layer 7 located between the inner layer 4 and the outer layer provides improved adhesion between them and as a consequence it leads to enhancement of structural integrity of the coating 3.

A summary overview of materials that can be used to create the coating 3 to be applied to the mold body 2 is shown below in Table 1.

To create the coating 3 comprising the inner layer 4 and the outer layer 5 one has to select one of materials from the column with examples of materials for an inner layer and one of materials from the column with examples of materials for an outer layer.

To create the coating 3 comprising additionally the first thermoformable adhesive layer 6 and/or the second thermoformable adhesive layer 7 one has to select one material for each layer from the column with examples of materials for adhesive layer.

**Table 1: Examples of materials for particular coating layers of a mold for epoxy castings.**

| **Examples of materials for an inner layer** | **Examples of materials for an outer layer** | **Examples of materials for an adhesive layer** |
|---|---|---|
| | • polyethylene terephthalate | • polyurethane |
| • polyethylene | • polyamide | • acrylic acid grafted polyethylene |
| • low density polyethylene | • polyvinylfluoride | |
| • polypropylene | • polyvinylidene fluoride | • acrylic acid grafted poly(ethylene-vinyl acetate) |
| • polystyrene | • polytetrafluoroethylene | |
| • high impact polystyrene | • polychlorotrifluoroethylene | |
| • styrenic block copolymers | • perfluoroalkoxy polymer | • maleic anhydride grafted poly(ethylene-vinyl acetate) |
| • thermoplastic polyolefin elastomers | • fluorinated ethylene-propylene | |
| • thermoplastic elastomer vulcanizates | • polyethylenetetrafluoroeth ylene | • maleic anhydride grafted polypropylene |
| • thermoplastic polyurethane elastomers | • polyethylenechlorotrifluoro ethylene | • other glues and adhesion promotors |
| • thermoplastic copolyester elastomers | | |
| • thermoplastic polyamide elastomers | | |

## Claims

1. A mold (1) for epoxy castings comprising
- a mold body (2),
- a coating (3) covering the mold body (2),
wherein
- the coating (3) is made of a multilayered thermoformable foil comprising at least an inner layer (4) and at least an outer layer (5) for being exposed to the epoxy resin during casting,
- the inner layer (4) is located between the mold body (2) and the outer layer (5), wherein the inner layer (4) fills the rough and porous surface of the mold body (2); and
- the layers (4, 5)of the multilayered thermoformable foil being made of different kinds of polymers,
**characterized in that**,
the coating (3) comprises a first thermoformable adhesive layer (6) located between the mold body (2) and the inner layer (4).

2. The mold according to claim 1, **characterized in that**, a hardness of the inner layer (4) is higher than 10 Shore A and lower than 85 Shore D whereas a hardness of the outer layer (5) is higher than 65 Shore A and lower than 120 Rockwell R, wherein the hardness of the inner layer (4) is not greater than the hardness of the outer layer (5).

3. The mold according to claim 1 or 2, **characterized in that**, the coating (3) comprises a second thermoformable adhesive layer (7) located between the inner layer (4) and the outer layer (5).

4. The mold according to any of preceding claims, **characterized in that**, the inner layer (4) is made of material selected from polyethylene, low-density polyethylene, polypropylene, polystyrene, high impact polystyrene, styrenic block copolymers, thermoplastic polyolefin elastomers, thermoplastic elastomer vulcanizates, thermoplastic polyurethane elastomers, thermoplastic copolyester elastomers or thermoplastic polyamide elastomers.

5. The mold according to any of preceding claims, **characterized in that**, the outer layer (5) is made of polyethylene terephthalate or polyamide.

6. The mold according to any of claims from 1 to 4, **characterized in that**, the outer layer (5) is made of fluoropolymer.

7. The mold according to claim 6, **characterized in that**, fluoropolymer is selected from a group of polyvinyl fluoride, polyvinylidene fluoride, polytetrafluoroethylene, polychlorotrifluoroethylene, perfluoroalkoxy polymer, fluorinated ethylene-propylene, polyethylenetetrafluoroethylene or polyethylenechlorotrifluoroethylene.

8. The mold according to any of claims 3-7, **characterized in that**, the thermoformable adhesive layer (6, 7) is made of material selected from polyurethane, acrylic acid grafted polyethylene, acrylic acid grafted poly(ethylene-vinyl acetate), maleic anhydride grafted poly(ethylene-vinyl acetate), maleic anhydride grafted polypropylene.

9. The mold according to claim 1, **characterized in that**, a thickness of the inner layer (4) is of 0.1 to 2 mm, wherein a thickness of the coating (3) covering the mold body (2) is of 0.15 to 3.0 mm.

10. The mold according to claim 1, **characterized in that**, a thickness of the outer layer (5) is of 0.05 to 1 mm.

11. A method for producing the mold according to claims 1-10 comprising the following steps of:
- preparing (101) a mold body (2),
- preparing (102) a coating (3) for covering the mold body (2), and
- applying (103) the coating (3) on the mold body (2) by thermoforming to form a mold (1).

12. The method according to claim 11, **characterized in that**, the mold body (2) is prepared in a 3D printing process.

13. The method according to any of claims 11 to 12, **characterized in that**, the thermoforming is vacuum thermoforming.

14. The method according to any of claims 11 to 12, **characterized in that**, the thermoforming is pressure thermoforming.

## Patentansprüche

1. Form (1) für Epoxidharz-Gussteile, welche Folgendes umfasst
- einen Formkörper (2),
- eine den Formkörper (2) bedeckende Beschichtung (3),
wobei
- die Beschichtung (3) aus einer mehrschichtigen, thermoformbaren Folie besteht, die mindestens eine Innenschicht (4) und mindestens eine Außenschicht (5) umfasst, die während des Gießvorgangs dem Epoxidharz ausgesetzt wird,
- die Innenschicht (4) zwischen dem Formkörper (2) und der Außenschicht (5) angeordnet ist, wobei die Innenschicht (4) die raue und poröse Oberfläche des Formkörpers (2) ausfüllt; und
- die Schichten (4, 5) der mehrschichtigen thermoformbaren Folie aus verschiedenen Arten von Polymeren bestehen,
**dadurch gekennzeichnet, dass**
die Beschichtung (3) eine erste thermoformbare Klebeschicht (6) umfasst, die zwischen dem Formkörper (2) und der Innenschicht (4) angeordnet ist.

2. Form nach Anspruch 1, **dadurch gekennzeichnet, dass** die Härte der Innenschicht (4) höher als 10 Shore A und niedriger als 85 Shore D ist, während die Härte der Außenschicht (5) höher als 65 Shore A und niedriger als 120 Rockwell R ist, wobei die Härte der Innenschicht (4) nicht größer ist als die Härte der Außenschicht (5).

3. Form gemäß Anspruch 1 oder 2, **dadurch gekennzeichnet, dass** die Beschichtung (3) eine zweite thermoformbare Klebeschicht (7) umfasst, die zwischen der Innenschicht (4) und der Außenschicht (5) angeordnet ist.

4. Form gemäß einem der vorstehenden Ansprüche, **dadurch gekennzeichnet, dass** die Innenschicht (4) aus einem Material besteht, das aus Polyethylen, Polyethylen niedriger Dichte, Polypropylen, Polystyrol, hochschlagfestem Polystyrol, Styrol-Blockcopolymeren, thermoplastischen Polyolefin-Elastomeren, thermoplastischen Elastomer-Vulkanisaten, thermoplastischen Polyurethan-Elastomeren, thermoplastischen Copolyester-Elastomeren oder thermoplastischen Polyamid-Elastomeren besteht.

5. Form gemäß einem der vorstehenden Ansprüche, **dadurch gekennzeichnet, dass** die Außenschicht (5) aus Polyethylenterephthalat oder Polyamid besteht.

6. Form gemäß einem der Ansprüche 1 bis 4, **dadurch gekennzeichnet, dass** die Außenschicht (5) aus einem Fluorpolymer besteht.

7. Form gemäß Anspruch 6, **dadurch gekennzeichnet, dass** das Fluorpolymer aus einer Gruppe ausgewählt ist, die aus Polyvinylfluorid, Polyvinylidenfluorid, Polytetrafluorethylen, Polychlortrifluorethylen, Perfluoralkoxypolymer, fluoriertem Ethylen-Propylen, Polyethylentetrafluorethylen oder Polyethylenchlortrifluorethylen besteht.

8. Form gemäß einem der Ansprüche 3 bis 7, **dadurch gekennzeichnet, dass** die thermoformbare Klebeschicht (6, 7) aus einem Material besteht, das aus Polyurethan, mit Acrylsäure gepfropftem Polyethylen, mit Acrylsäure gepfropftem Poly(ethylen-vinylacetat), mit Maleinsäureanhydrid gepfropftem Poly(ethylen-vinylacetat) oder mit Maleinsäureanhydrid gepfropftem Polypropylen ausgewählt ist.

9. Form gemäß Anspruch 1, **dadurch gekennzeichnet, dass** die Dicke der Innenschicht (4) 0,1 bis 2 mm beträgt, wobei die Dicke der den Formkörper (2) bedeckenden Beschichtung (3) 0,15 bis 3,0 mm beträgt.

10. Form gemäß Anspruch 1, **dadurch gekennzeichnet, dass** die Dicke der Außenschicht (5) 0,05 bis 1 mm beträgt.

11. Verfahren zur Herstellung der Form gemäß den Ansprüchen 1 bis 10, welches die folgenden Schritte umfasst:
- Herstellen (101) eines Formkörpers (2),
- Herstellen (102) einer Beschichtung (3) zum Bedecken des Formkörpers (2) und
- Aufbringen (103) der Beschichtung (3) auf den Formkörper (2) durch Thermoformen, um eine Form (1) zu bilden.

12. Verfahren gemäß Anspruch 11, **dadurch gekennzeichnet, dass** der Formkörper (2) in einem 3D-Druckverfahren hergestellt wird.

13. Verfahren gemäß einem der Ansprüche 11 bis 12, **dadurch gekennzeichnet, dass** das Thermoformen ein Vakuum-Thermoformen ist.

14. Verfahren gemäß einem der Ansprüche 11 bis 12, **dadurch gekennzeichnet, dass** das Thermoformen ein Druck-Thermoformen ist.

## Revendications

1. Un moule (1) pour moulages en époxy comprenant
- un corps de moule (2),
- un revêtement (3) recouvrant le corps de moule (2),
dans lequel
- le revêtement (3) est constitué d'une feuille thermoformable multicouche comprenant au moins une couche interne (4) et au moins une couche externe (5) pour être exposée à la résine époxy lors du moulage,
- la couche interne (4) est située entre le corps de moule (2) et la couche externe (5), la couche interne (4) remplissant la surface rugueuse et poreuse du corps de moule (2) ; et
- les couches (4, 5) de la feuille thermoformable multicouche étant constituées de différents types de polymères,
**caractérisé en ce que**
le revêtement (3) comprend une première couche adhésive thermoformable (6) située entre le corps de moule (2) et la couche interne (4).

2. Le moule selon la revendication 1, **caractérisé en ce que** la dureté de la couche interne (4) est supérieure à 10 Shore A et inférieure à 85 Shore D, tandis que la dureté de la couche externe (5) est supérieure à 65 Shore A et inférieure à 120 Rockwell R, la dureté de la couche interne (4) n'étant pas supérieure à la dureté de la couche externe (5).

3. Le moule selon la revendication 1 ou 2, **caractérisé en ce que** le revêtement (3) comprend une deuxième couche adhésive thermoformable (7) située entre la couche interne (4) et la couche externe (5).

4. Le moule selon l'une quelconque des revendications précédentes, **caractérisé en ce que** la couche interne (4) est constituée d'un matériau choisi parmi le polyéthylène, le polyéthylène basse densité, le polypropylène, le polystyrène, le polystyrène choc, les copolymères séquencés styréniques, les élastomères polyoléfines thermoplastiques, les vulcanisats d'élastomères thermoplastiques, les élastomères polyuréthanes thermoplastiques, les élastomères copolyesters thermoplastiques ou les élastomères polyamides thermoplastiques.

5. Le moule selon l'une quelconque des revendications précédentes, **caractérisé en ce que** la couche externe (5) est en polyéthylène téréphtalate ou en polyamide.

6. Le moule selon l'une quelconque des revendications de 1 à 4, **caractérisé en ce que** la couche extérieure (5) est en fluoropolymère.

7. Le moule selon la revendication 6, **caractérisé en ce que** le fluoropolymère est choisi parmi un groupe de fluorure de polyvinyle, de fluorure de polyvinylidène, de polytétrafluoroéthylène, de polychlorotrifluoroéthylène, de polymère perfluoroalcoxy, d'éthylène-propylène fluoré, de polyéthylènetétrafluoroéthylène ou de polyéthylènechlorotrifluoroéthylène.

8. Le moule selon l'une quelconque des revendications 3 à 7, **caractérisé en ce que** la couche adhésive thermoformable (6, 7) est constituée d'un matériau choisi parmi le polyuréthane, le polyéthylène greffé à l'acide acrylique, le poly(éthylène-acétate de vinyle) greffé à l'acide acrylique, le poly(éthylène-acétate de vinyle) greffé à l'anhydride maléique, le polypropylène greffé à l'anhydride maléique.

9. Le moule selon la revendication 1, **caractérisé en ce que** l'épaisseur de la couche interne (4) est comprise entre 0,1 et 2 mm, tandis que l'épaisseur du revêtement (3) recouvrant le corps du moule (2) est comprise entre 0,15 et 3,0 mm.

10. Le moule selon la revendication 1, **caractérisé en ce que** l'épaisseur de la couche externe (5) est comprise entre 0,05 et 1 mm.

11. Un procédé de fabrication du moule selon les revendications 1 à 10, comprenant les étapes suivantes :
- préparation (101) d'un corps de moule (2),
- préparation (102) d'un revêtement (3) destiné à recouvrir le corps de moule (2), et
- application (103) du revêtement (3) sur le corps de moule (2) par thermoformage afin de former un moule (1).

12. Le procédé selon la revendication 11, **caractérisé en ce que** le corps de moule (2) est préparé par un procédé d'impression 3D.

13. Le procédé selon l'une quelconque des revendications 11 à 12, **caractérisé en ce que** le thermoformage est un thermoformage sous vide.

14. Le procédé selon l'une quelconque des revendications 11 à 12, **caractérisé en ce que** le thermoformage est un thermoformage sous pression.
